# EUROPÄISCHE PATENTSCHRIFT

(11) **EP 2 156 066 B1**
(45) Veröffentlichungstag und Bekanntmachung des Hinweises auf die Patenterteilung: **16.11.2011**
(21) Anmeldenummer: 08749143.7
(22) Anmeldetag: 25.04.2008
(51) Int. Cl.: F16D 48/06, F16D 48/04

(54) **KUPPLUNGSSTELLVORRICHTUNG FÜR EIN MANUELLES SCHALTGETRIEBE EINES FAHRZEUGS UND ENTSPRECHENDES STEUERUNGSVERFAHREN**
CLUTCH ACTUATION DEVICE FOR A MANUAL TRANSMISSION OF A VEHICLE AND CORRESPONDING CONTROL METHOD
ORGANE DE COMMANDE D'EMBRAYAGE POUR UNE BOITE DE VITESSES MANUELLE D'UN VEHICULE ET PROCEDE DE COMMANDE CORRESPONDANT

(30) Priorität: 11.05.2007 DE 102007022792
(43) Veröffentlichungstag der Anmeldung: 24.02.2010
(73) Patentinhaber: Knorr-Bremse Systeme für Nutzfahrzeuge GmbH, 80809 München (DE)
(72) Erfinder: DÖRR, Wolfgang, 82223 Eichenau (DE)
(74) Vertreter: Mattusch, Gundula
(86) Internationale Anmeldenummer: PCT/EP2008/003365
(87) Internationale Veröffentlichungsnummer: WO 2008/138466

(56) Entgegenhaltungen:
- EP-A- 1 010 912
- EP-A- 1 342 930
- EP-A- 1 772 645
- WO-A-88/10376
- WO-A-03/019026
- DE-A1- 10 065 023
- DE-A1- 10 107 962
- DE-A1- 10 250 729
- DE-A1- 19 856 587
- DE-A1-102005 026 472
- DE-A1-102005 028 122
- DE-U1- 20 315 735
- FR-A- 2 807 808
- FR-A- 2 862 114

## Beschreibung

Die Erfindung betrifft eine Kupplungsstellvorrichtung, insbesondere für ein manuelles Schaltgetriebe eines Fahrzeugs, insbesondere eines Nutzfahrzeugs, mit einer Kupplungsstellungsvorgabeeinrichtung, die in unterschiedliche Stellungen gebracht werden kann, auf deren Grundlage eine entsprechende Betätigung einer Kupplung erfolgt.

Weiterhin bezieht sich die Erfindung auf ein Verfahren zur Steuerung/Regelung einer Kupplungsstellvorrichtung, insbesondere für ein manuelles Schaltgetriebe eines Fahrzeugs, insbesondere eines Nutzfahrzeugs, wobei die Kupplungsstellvorrichtung eine Kupplungsstellungsvorgabeeinrichtung umfasst, die in unterschiedliche Stellungen gebracht wird, auf deren Grundlage eine entsprechende Betätigung einer Kupplung erfolgt.

Im Zusammenhang mit manuellen Schaltgetrieben umfassen gattungsgemäße Kupplungsstellvorrichtungen üblicherweise Kupplungsstellungsvorgabeeinrichtungen in der Form von Kupplungspedaleinrichtungen mit fußbetätigbaren Kupplungspedalen, die meist hydraulisch mit einem Stellzylinder gekoppelt sind. Der hydraulische Stellzylinder ist wiederum mit einer Kupplungsbetätigungseinrichtung, beispielsweise einem Zentralausrücker, mechanisch gekoppelt, der zur unmittelbaren Betätigung einer Kupplung dient. Um die zur Betätigung der Kupplung durch das Kupplungspedal aufzubringende Kraft zumindest teilweise zu reduzieren, werden üblicherweise verschiedene Ausführungen von Kupplungskraftverstärkungen eingesetzt. Beispielsweise kann die Kupplungspedaleinrichtung einen sogenannten hydraulischen Master- oder Hauptzylinder umfassen, der mit einem fußbetätigbaren Kupplungspedal der Kupplungspedaleinrichtung mechanisch gekoppelt ist. In diesem Fall kann ein als Stellzylinder ausgebildeter Kupplungskraftverstärker mit einem mit dem Masterzylinder der Kupplungspedaleinrichtung gekoppelten hydraulischen Nehmerzylinder ausgestattet sein. Der Kupplungskraftverstärker ist dabei zusätzlich mit einem Druckluftsystem gekoppelt, um die Kupplungskraftverstärkung im Zusammenwirken mit dem Nehmerzylinder vornehmen zu können. Auch kann vorgesehen sein, dass die Kupplungskraftverstärkung quasi in der Kupplungspedaleinrichtung stattfindet. Dementsprechend ist die Kupplungspedaleinrichtung bereits mit dem Druckluftsystem gekoppelt, insbesondere der Masterzylinder der Kupplungspedaleinrichtung, wobei der Masterzylinder mit dem hydraulischen Stellzylinder gekoppelt ist. Durch Zusammenwirkung des Masterzylinders mit dem Druckluftsystem wird die Kupplungskraftverstärkung bereits bei der Kupplungspedaleinrichtung vorgenommen, die über die hydraulische Kopplung den in diesem Fall als hydraulischen Nehmerzylinder ausgebildeten Stellzylinder ansteuert. Bei diesen dem Stand der Technik angehörenden Kupplungsstellvorrichtungen für manuelle Schaltgetriebe ist durch den Einsatz der hydraulischen Ansteuerung beziehungsweise Kopplung keine Kupplungs- oder Getriebesteuereinrichtung beziehungsweise Getriebesteuerelektronik vorhanden beziehungsweise vorgesehen. Die Betätigung der Kupplung im Zusammenhang mit manuellen Schaltgetrieben im Nutzfahrzeugbereich erfolgt somit zumindest teilweise durch Verwendung solcher hydraulischer Systeme. Deren Einbindung in ein Gesamtsystem bewirkt jedoch, dass das Gesamtsystem sehr kostspielig und darüber hinaus wartungsaufwändig ist. Sonderfunktionen, wie beispielsweise Kupplungsüberwachungsfunktionen wie eine Kupplungsverschleißerkennung, eine Kupplungsverschleißoptimierung sowie ein Überlastschutz für die Kupplung lassen sich nur mit Zusatzaufwand realisieren.

FR 2807808 offenbart eine Kupplungestellvorrichtung nach dem Oberbegriff des Anspruchs 1 und ein Verfahren nach dem Oberbegriff des Anspruchs 6.

Der Erfindung liegt daher die Aufgabe zugrunde, die gattungsgemäßen Kupplungsstellvorrichtungen und Verfahren zur Steuerung/Regelung solcher Kupplungsstellvorrichtungen derart weiterzubilden, dass die vorgenannten Nachteile zumindest teilweise überwunden werden können und insbesondere eine Kupplungsstellvorrichtung mit erhöhter Funktionalität geschaffen wird.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Kupplungsstellvorrichtung baut auf dem gattungsgemäßen Stand der Technik dadurch auf, dass die Kupplungsstellungsvorgabeeinrichtung geeignet ist, in Abhängigkeit von ihrer Stellung elektrische Signale zu erzeugen, auf deren Grundlage die Kupplung entsprechend betätigt wird. Die Kupplungsstellungsvorgabeeinrichtung ist in diesem Zusammenhang vorzugsweise eine Kupplungspedaleinrichtung, die ein fußbetätigbares Kupplungspedal umfasst. Ebenso ist aber auch denkbar, einen Hebel zur Kupplungsstellungsvorgabe zu verwenden, beispielsweise im Zusammenhang mit Fahrzeugen wie Motorrädern. Die Erzeugung der elektrischen Signale kann beispielsweise durch einen kostengünstigen Kupplungspedalsensor vorgenommen werden. Dadurch, dass die Kupplungsstellungsvorgabeeinrichtung ausschließlich elektrische Signale in Abhängigkeit von ihrer Stellung erzeugt beziehungsweise liefert, wird ein so genanntes Clutch-by-wire System für manuelle Schaltgetriebe geschaffen. Die als Kupplungspedaleinrichtung mit Kupplungspedal ausgebildete Kupplungsstellungsvorgabeeinrichtung liefert somit einen rein elektrischen Stellwert. Dadurch ergibt sich unter anderem der Vorteil, dass die Kupplungsstellvorrichtung mechanisch vereinfacht werden kann, da keine hydraulische Kopplung der Kupplungspedaleinrichtung mit einem Kupplungskraftverstärker oder einem hydraulischen Stellzylinder notwendig ist. Somit können durch Wegfall der hydraulischen Kopplung Kosten sowie für diese Kopplung erforderlicher Bauraum eingespart werden. Im Falle der Verwendung der Kupplungspedal aufweisenden Kupplungspedaleinrichtung kann beispielsweise durch geeignete Wahl einer entsprechenden Feder eine beliebige Gegenkraftkennlinie zur Betätigung des Kupplungspedals erzeugt werden, da die Kupplungspedaleinrichtung pneumatisch und hydraulisch gänzlich entkoppelt ist und lediglich über eine elektrische Anbindung durch den Kupplungspedalsensor verfügt. Daher können kostengünstige und einfache elektrische Sensorschalter zur Erzeugung des elektrischen Signals verwendet werden.

Die erfindungsgemäße Kupplungsstellvorrichtung sicht vor, dass die Kupplungsstellungsvorgabeeinrichtung geeignet ist, die elektrischen Signale an eine Steuereinrichtung auszugeben, die auf der Grundlage der elektrischen Signale eine Druckbeaufschlagung einer Kupplungsbetätigungseinrichtung zur Betätigung der Kupplung bewirkt. Dabei lässt sich beispielsweise das Ausmaß der Druckbeaufschlagung der Kupplungsbetätigungseinrichtung über eine Ventileinrichtung einstellen. Vorzugsweise wird eine Kupplungsregeleinrichtung beziehungsweise Kupplungsregeleinheit ausgebildet, die durch die Integration der Steuereinrichtung beziehungsweise Steuerelektronik und der notwendigen Magnetventile umfassenden Ventileinrichtung zur Ansteuerung der Kupplungsbetätigungsvorrichtung ausgebildet wird. Vorzugsweise kann diese Kupplungsregeleinheit dann extern an dem manuellen Schaltgetriebe, insbesondere an einer Kupplungsglocke, montiert werden. Dadurch wird eine erhöhte Austauschbarkeit im Servicefall gewährleistet. Weiterhin können durch das Vorsehen der Kupplungsregeleinheit im Zusammenhang mit dem manuellen Schaltgetriebe auch die Vorteile einer automatisierten Kupplungssteuerung genutzt werden. Beispielsweise kann eine Verschleißüberwachung von Kupplungsscheiben der Kupplung vorgenommen werden, da eine Kupplungsposition der Steuereinrichtung beispielsweise über einen CAN-Bus zur Verfügung gestellt werden kann. Weiterhin lässt sich auch eine Verschleißminimierung der Kupplungsscheiben der Kupplung durchführen. Diese wird unter anderem durch eine Berechnung der Kupplungslast in Abhängigkeit von einer Drehzahl, einem Drehmoment, einem Schlupf, etc. ermöglicht und beispielsweise durch ein "härteres Einkuppeln" der Kupplung anhand einer entsprechend definierten Kupplungspedalvorgabe vorgenommen; beispielsweise dann, wenn der Fahrer des Fahrzeugs die Kupplung unnötig lange in einer schleifenden Stellung hält, so dass dann trotz teilweise niedergedrücktem Kupplungspedal eine vollständige Einrückung der Kupplung erfolgt. Ferner kann durch die Kupplungsregeleinheit ein Überlastschutz realisiert werden. Aufgrund der vollständigen hydraulischen, pneumatischen und mechanischen Entkopplung der Kupplungspedaleinrichtung von einem Stellzylinder kann eine Anpassung der Kupplungspedalcharakteristik erzielt werden, beispielsweise durch elektronische Optimierung der Kupplungskennlinie. Des Weiteren können sämtliche Diagnosefunktionen durch die Kupplungsregeleinheit erfolgen. Auch eine Kommunikation zu anderen Fahrzeugsteuergeräten, beispielsweise eine Kommunikation zu einem Steuergerät eines elektronischen Bremssystems kann vorgenommen werden; in diesem Fall kann diese Kommunikation zum Beispiel darin bestehen, dass die Kupplung bei Vorliegen eines Antiblockierbetriebs durch ein ABS-System geöffnet wird und damit ein Kraftfluss in einem Antriebsstrang im ABS-Regelfall unterbrochen wird. Analog kann die Kommunikation auch zwischen einer ESP-Elektronik beziehungsweise einer ESP-Steuereinrichtung zur Ausführung eines elektronischen Stabilitätsprogramms vorgesehen sein, über die der Antriebsstrang in einem ESP-Regelfall unterbrochen wird. Ebenso lässt sich die Kommunikation mit einer ASR-Elektronik beziehungsweise einer ASR-Steuereinrichtung zur Antriebsschlupfregelung realisieren, bei der beispielsweise ein "automatisiertes" Anfahren mit schleifender Kupplung ermöglicht wird, selbst wenn das Kupplungspedal nicht betätigt wird, um ein Durchdrehen von Antriebsrädern des Fahrzeugs zu verhindern. Darüber hinaus lässt sich auch ein Zusammenspiel mit einer Haltestellenbremse realisieren beziehungsweise die Steuerung/Regelung durch die Kupplungsregeleinheit lässt sich mit einer so genannten Hill-Holder-Funktion kombinieren. So wird eine Bremskraft beispielsweise beim Anhalten des Fahrzeugs an einem Berg gehalten, ohne dass eine Feststellbremse, beispielsweise eine Handbremse, des Fahrzeugs betätigt werden muss. Gleichzeitig kann ein automatisiertes Auskuppeln der Kupplung vorgenommen werden, falls die nicht durch den Fahrer erfolgt, um ein Absterben des Verbrennungsmotors des Fahrzeugs zu verhindern. Ein erneutes Anfahren erfolgt dann durch Betätigung eines Gaspedals, wobei automatisiert eingekuppelt werden kann. Auch lässt sich ein Zusammenspiel mit einer Getriebesteuerung in Verbindung mit einem Getriebeservo verwirklichen, die beispielsweise eine Freigabe des Getriebeservos (Schaltkraftunterstützung) nur bei betätigter Kupplung zulässt. '

Weiterhin ergeben sich auch im Zusammenhang mit der als Stellzylinder ausgebildeten Kupplungsbetätigungseinrichtung weitere Vorteile. So kann der Stellzylinder extern an einer Kupplungsglocke angebracht und vorzugsweise in die Kupplungsregeleinheit integriert werden. Alternativ kann der Stellzylinder auch separat, beispielsweise als Zentralausrücker, ausgeführt werden. Vorzugsweise ist ein Weg- oder Positionssensor direkt im Stellzylinder vorgesehen. Eine separate Auswerteeinheit für diesen Sensor kann beispielsweise sowohl im Stellzylinder oder auch an der Kupplungsregeleinheit angeordnet sein. Um eine Sicherheit eines solchen Clutch-by-wire Systems zu erhöhen, kann beispielsweise eine redundante Ausführung von Komponenten der Kupplungsstellvorrichtung vorgenommen werden. Insbesondere kann beispielsweise vorgesehen sein, dass die Kupplungspedaleinrichtung zwei voneinander unabhängige elektrische Signale für die Kupplungspedalposition beziehungsweise Kupplungspedalstellung liefert, zum Beispiel über zwei unterschiedliche elektrische Leitungen von zwei entsprechenden Sensoren. Gleichermaßen können vier elektrische Leitungen vorgesehen sein, um der Kupplungsregeleinheit zwei Versorgungsspannungen und zwei Massen zur Verfügung zu stellen. Damit wird eine Ausfallwahrscheinlichkeit der Kupplungsregeleinheit zumindest stark vermindert. Im Hinblick auf die Einstellung der Druckbeaufschlagung der Kupplungsbetätigungseinrichtung kann die Ventileinrichtung redundant ausgeführte Magnetventile sowohl zur Be- als auch Entlüftung der Kupplungsbetätigungseinrichtung umfassen. Ebenso kann vorgesehen sein, dass der Stellzylinder über zwei elektrische Leitungen für zwei voneinander unabhängige elektrische Signale für den Ausrückweg der Kupplung der Kupplungsregeleinheit zur Verfügung stellt.

Darüber hinaus kann die erfindungsgemäße Kupplungsstellvorrichtung so ausgebildet werden, dass eine Ventileinrichtung vorgesehen ist, die geeignet ist, die Druckbeaufschlagung der Kupplungsbetätigungseinrichtung vorzunehmen. Beispielsweise kann die Ventileinrichtung zwei parallel geschaltete Belüftungsventile zur Belüftung der Kupplungsbetätigungseinrichtung umfassen, wobei das eine der beiden Magnetventile einen großen Strömungsquerschnitt und das andere einen kleinen beziehungsweise kleineren Strömungsquerschnitt aufweist. Somit kann die Kupplungsbetätigungseinrichtung mit unterschiedlichen Volumenströmen belüftet werden. Gleichermaßen werden vorzugsweise auch zur Entlüftung der Kupplungsbetätigungseinrichtung zwei parallel geschaltete Magnetventile mit unterschiedlichen Strömungsquerschnitten verwender, Insbesondere sind diese Magnetventile zur Be- und Entlüftung als 2/2-Wegeventile ausgeführt.

Weiterhin ist die erfindungsgemäße Kupplungsstellvorrichtung derart verwirklicht, dass die Kupplungsstellungsvorgabeeinrichtung geeignet ist, in Abhängigkeit von ihrer Stellung weitere elektrische Signale zu erzeugen und diese weiteren elektrischen Signale an eine weitere Steuereinrichtung auszugeben, wobei die weitere Steuereinrichtung geeignet ist, die weiteren elektrischen Signale an die Steuereinrichtung auszugeben. Durch das Vorsehen der weiteren Steuereinrichtung wird die Sicherheit des Clutch-by-wire Systems weiter erhöht. In diesem Zusammenhang ist vorgesehen, dass die Kupplungspedaleinrichtung zwei voneinander unabhängige elektrische Signale liefert, wobei das erste Signal der Steuereinrichtung, die beispielsweise der Kupplungsregeleinheit zugeordnet ist, zur Verfügung gestellt wird, während das zweite Signal zum Beispiel über einen CAN-Bus der weiteren Steuereinrichtung zur Verfügung gestellt wird. Diese weitere Steuereinrichtung kann insbesondere ein beliebiges Fahrzeugsteuergerät sein, das wiederum der der Kupplungsregeleinheit zugeordneten Steuereinrichtung die weiteren Signale zur Verfügung stellt, beispielsweise ebenso über einen CAN-Bus. Selbstverständlich können sowohl die Steuereinrichtung der Kupplungsregeleinheit als auch die weitere Steuereinheit mit beliebigen Fahrzeugsteuergeräten über den CAN-Bus in Kommunikation stehen. In diesem Fall ist beispielsweise das Trennen des Antriebsstrangs des Fahrzeugs durch die Kupplung bei Vorliegen der Antiblockiersteuerung durch das ABS-System möglich.

Weiterhin kann insbesondere bei einem erfassten Systemausfall der Kupplungsstellvorrichtung der Antriebsstrang des Fahrzeugs entweder manuell über das Getriebe durch entsprechendes Schalten in einen Leerlauf oder vorzugsweise elektronisch anhand des entsprechenden Steuergeräts vorgenommen werden, wenn das manuelle Schaltgetriebe dies konstruktionsbedingt erlaubt. In diesem Zusammenhang kann in besonders vorteilhafter Weise vorgesehen sein, dass mit dem manuellen Schaltgetriebe gegebenenfalls ein halbautomatisiertes Fahren realisiert wird, falls das manuelle Schaltgetriebe dies konstruktionsbedingt zulässt. Beispielsweise kann bei Betätigung eines Gangschalthebels über einen Sensor eine Kupplungsbetätigung ausgelöst werden, so dass der Fahrer beim Schalten während der Fahrt das Kupplungspedal nicht mehr betätigen muss. Das Kupplungspedal wird in diesem Fall nur noch zum Anfahren und Rangieren benötigt.

Vorzugsweise wird die erfindungsgemäße Kupplungsstellvorrichtung so umgesetzt, dass ein Wegsensor vorgesehen ist, mittels dem eine Stellung der Kupplungsbetätigungseinrichtung ermittelbar ist und auf der Grundlage von dessen Signalen die Stellung der Kupplungsbetätigungseinrichtung steuerbar/regelbar ist.

In diesem Zusammenhang kann vorgesehen sein, die erfindungsgemäße Kupplungsstellvorrichtung derart weiterzubilden, dass weiterhin ein Drucksensor vorgesehen ist, mittels dem die Stellung der Kupplungsbetätigungseinrichtung zumindest bei Ausfall des Wegsensors ermittelbar ist und auf der Grundlage von dessen Signalen die Stellung der Kupplungsbetätigungseinrichtung steuerbar/regelbar ist. Dadurch ist über den beispielsweise in der Kupplungsregeleinheit integrierten Drucksensor eine Notregelung auch bei Ausfall des Positions- beziehungsweise Wegsensors in der Kupplungsbetätigungseinrichtung möglich. Ebenso kann der Drucksensor aber auch zur Verbesserung der Regelgüte im Zusammenwirken mit dem Wegsensor vorgesehen sein.

Weiterhin kann die erfindungsgemäße Kupplungsstellvorrichtung so verwirklicht werden, dass eine oder mehrere der folgenden Komponenten in einem Gehäuse in einer mechatronischen Einheit aufgenommen werden: die Steuereinrichtung, die Ventileinrichtung, der Wegsensor, der Drucksensor, und die Kupplungsbetätigungseinrichtung.

Das erfindungsgemäße Verfahren baut auf dem gattungsgemäßen Stand der Technik dadurch auf, dass die Kupplungsstellungsvorgabeeinrichtung in Abhängigkeit von ihrer Stellung elektrische Signale erzeugt, auf deren Grundlage die Kupplung entsprechend betätigt wird. Dadurch ergeben sich die im Zusammenhang mit der erfindungsgemäßen Kupplungsstellvorrichtung erläuterten Vorteile in gleicher oder ähnlicher Weise, weshalb zur Vermeidung von Wiederholungen auf die entsprechenden Ausführungen im Zusammenhang mit der erfindungsgemäßen Kupplungsstellvorrichtung verwiesen wird.

Gleiches gilt sinngemäß für die folgenden bevorzugten Ausführungsformen des erfindungsgemäßen Verfahrens, wobei zur Vermeidung von Wiederholungen auch diesbezüglich auf die entsprechenden Ausführungen im Zusammenhang mit der erfindungsgemäßen Kupplungsstellvorrichtung verwiesen wird.

Das erfindungsgemäße Verfahren sieht vor, dass die Kupplungsstellungsvorgabeeinrichtung die elektrischen Signale an eine Steuereinrichtung ausgibt, die auf der Grundlage der elektrischen Signale eine Druckbeaufschlagung einer Kupplungsbetätigungseinrichtung zur Betätigung der Kupplung bewirkt.

Weiterhin kann das erfindungsgemäße Verfahren so verwirklicht werden, dass eine Ventileinrichtung die Druckbeaufschlagung der Kupplungsbetätigungseinrichtung vornimmt.

Darüber hinaus wird das erfindungsgemäße Verfahren derart ausgebildet, dass die Kupplungsstellungsvorgabeeinrichtung in Abhängigkeit von ihrer Stellung weitere elektrische Signale erzeugt und diese weiteren elektrischen Signale an eine weitere Steuereinrichtung ausgibt, wobei die weitere Steuereinrichtung die weiteren elektrischen Signale an die Steuereinrichtung ausgibt.

Ferner kann das erfindungsgemäße Verfahren so ausgeführt werden, dass mittels eines Wegsensors eine Stellung der Kupplungsbetätigungseinrichtung ermittelt wird und auf der Grundlage von Signalen des Wegsensors die Stellung der Kupplungsbetätigungseinrichtung gesteuert/geregelt wird.

In diesem Zusammenhang kann vorgesehen sein, das erfindungsgemäße Verfahren so weiterzubilden, dass mittels eines Drucksensors die Stellung der Kupplungsbetätigungseinrichtung zumindest bei Ausfall des Wegsensors ermittelt wird und auf der Grundlage von Signalen des Drucksensors die Stellung der Kupplungsbetätigungseinrichtung gesteuert/geregelt wird.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer nicht erfindungsgemäßen Kupplungsstellvorrichtung gemäß einem ersten Ausführungsbeispiel der Erfindung, die zur Durchführung des erfindungsgemäßen Verfahrens geeignet ist; und
- Figur 2: eine schematische Darstellung einer erfindungsgemäßen Kupplungsstellvorrichtung gemäß einem zweiten Ausführungsbeispiel der Erfindung, die zur Durchführung des erfindungsgemäßen Verfahrens geeignet ist.

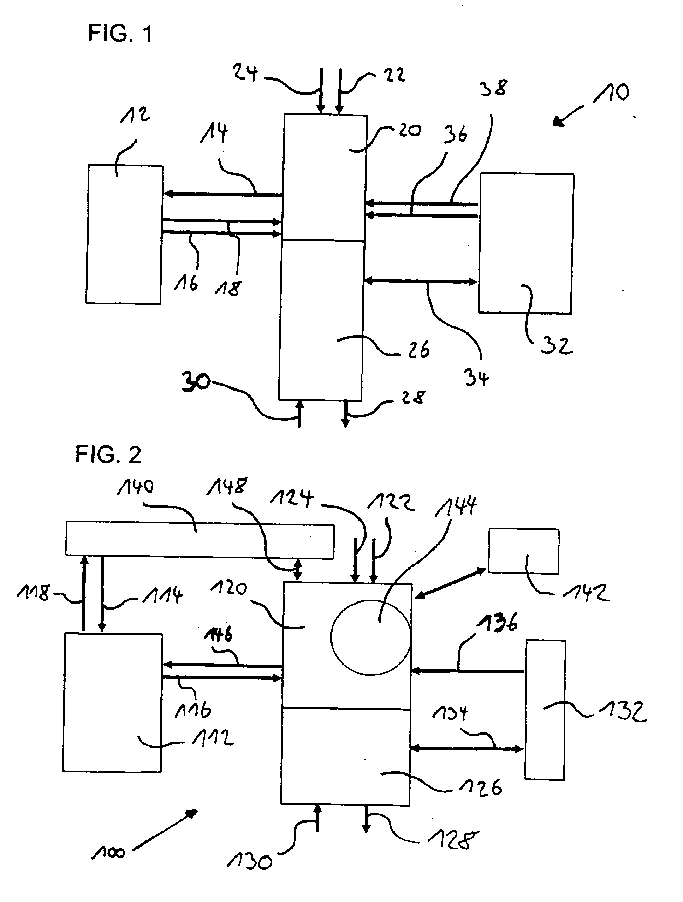

Figur 1 zeigt eine schematische Darstellung einer nicht erfindungsgemäßen Kupplungsstellvorrichtung 10 gemäß einem ersten Ausführungsbeispiel der Erfindung, die zur Durchführung des erfindungsgemäßen Verfahrens geeignet ist. Die erfindungsgemäße Kupplungsstellvorrichtung 10 ist in diesem Ausführungsbeispiel für ein manuelles Schaltgetriebe eines Nutzfahrzeugs vorgesehen und umfasst eine Kupplungsstellungsvorgabeeinrichtung 12. Die Kupplungsstellungsvorgabeeinrichtung 12 ist insbesondere als eine Kupplungspedaleinrichtung mit einem fußbetätigbaren Kupplungspedal ausgeführt, das beispielsweise von einem Fahrer des Nutzfahrzeugs betätigt werden kann. Die Kupplungsstellungsvorgabeeinrichtung 12 ist erfindungsgemäß so ausgebildet, dass sie in Abhängigkeit ihrer Stellung, beispielsweise der Stellung des Kupplungspedals, elektrische Signale erzeugt und einer Steuereinrichtung 20 zur Verfügung stellt. Diese Signale werden beispielsweise von einem der Kupplungsstellungsvorgabeeinrichtung 12 zugeordneten Sensor erzeugt, insbesondere einem Kupplungspedalsensor. Zu diesem Zweck ist die Kupplungsstellungsvorgabeeinrichtung 12 mit der Steuereinrichtung 20 über eine Stromversorgungsleitung 14 gekoppelt, wodurch der Kupplungsstellungsvorgabeeinrichtung 12 elektrischer Strom von der Steuereinrichtung 20 zur Verfügung gestellt werden kann. Weiterhin ist die die Kupplungsstellungsvorgabeeinrichtung 12 über eine Signalleitung 16 und eine weitere Signalleitung 18, die insbesondere zwei invertierte Signalausgänge der Kupplungsstellungsvorgabeeinrichtung 12 ausbilden, mit der Steuereinrichtung 20 gekoppelt, um der Steuereinrichtung 20 mit einer Kupplungspedalposition korrelierende Signale zur Verfügung zu stellen zu können. Dabei ist die weitere Signalleitung 18 zur Schaffung einer Redundanz vorgesehen. Der Steuereinrichtung 20 wird elektrischer Strom über eine Stromversorgungsleitung 22 und eine weitere Stromversorgungsleitung 24 zur Verfügung gestellt, wobei die weitere Stromversorgungsleitung 24 zur Schaffung einer Redundanz vorgesehen ist. Im dargestellten Fall ist die Steuereinrichtung 20 weiterhin mit einer Ventileinrichtung 26 gekoppelt, der über eine Ventileinrichtungsbelüftung 30 Druckluft zuführbar und von der über eine Ventileinrichtungsentlüftung 28 Druckluft abführbar ist. Eine Ansteuerung der Ventileinrichtung 26 wird dabei von der Steuereinrichtung 20 vorgenommen, so dass durch die Ventileinrichtung 26 über die Ventileinrichtungsbelüftung 30 einer Kupplungsbetätigungseinrichtung 32 Druckluft definiert zuführbar und durch die Ventileinrichtung 26 über die Ventileinrichtungsentlüftung 28 Druckluft aus der Kupplungsbetätigungseinrichtung 32 definiert abführbar ist. Zu diesem Zweck ist die Ventileinrichtung 26 über eine Kopplung 34, insbesondere eine pneumatische Leitung, mit der Kupplungsbetätigungseinrichtung 32 gekoppelt. Die Ventileinrichtung 26 kann dabei eine dem Fachmann bekannte Ventileinrichtung sein, die mehrere 2/2-Wegenventile zur Dosierung Be- und Entlüftungsvolumenströme umfasst. Die Kupplungsbetätigungseinrichtung 32 dient zur Betätigung einer nicht dargestellten Kupplung, das heißt zum Ein- und Ausrücken einer Kupplung des Nutzfahrzeugs, und ist insbesondere als ein Zentralausrücker ausgebildet. Um eine Stellung der Kupplungsbetätigungseinrichtung 32 zu ermitteln, umfasst diese einen nicht in Figur 1 dargestellten Weg- oder Positionssensor, mittels dem die Stellung der Kupplungsbetätigungseinrichtung ermittelbar ist. In diesem Ausführungsbeispiel werden die Signale des Wegsensors über eine Wegsensorsignalleitung 36 und eine weitere Wegsensorsignalleitung 38 der Steuereinrichtung 20 zur Verfügung gestellt, die insbesondere zwei invertierte Signalausgänge des Wegsensors ausbilden. Dabei dient die weitere Wegsensorsignalleitung 38 wiederum zur Schaffung einer Redundanz. Bevorzugt sind insbesondere die Steuereinrichtung 20, die Ventileinrichtung 26, optional der Wegsensor und optional die Kupplungsbetätigungseinrichtung 32 in einem Gehäuse in einer mechatronischen Einheit ausgebildet.

Das erfindungsgemäße Verfahren zur Steuerung/Regelung der erfindungsgemäßen Kupplungsstellvorrichtung 10 gestaltet sich wie folgt. Es wird der Fall angenommen, dass der Fahrer des Nutzfahrzeugs beabsichtigt, einen Gangwechsel durch das manuelle Schaltgetriebe vorzunehmen. Zu diesem Zweck betätigt der Fahrer die Kupplungsstellungsvorgabeeinrichtung 12, insbesondere das Kupplungspedal der Kupplungspedaleinrichtung. Dadurch wird die Kupplungsstellungsvorgabeeinrichtung 12 in eine Stellung gebracht, die ein vollständiges Ausrücken der Kupplung und damit eine Unterbrechung eines Kraftflusses im Antriebsstrang des Nutzfahrzeugs bewirken soll. Die Kupplungsstellungsvorgabeeinrichtung 12 erzeugt somit in Abhängigkeit von dieser Stellung entsprechende elektrische Signale und gibt diese an die Steuereinrichtung 20 aus. Die Steuereinrichtung 20 wertet diese Signale aus und ermittelt in diesem Fall, dass die Kupplung vollständig auszurücken ist. Daher steuert die Steuereinrichtung 20 die Ventileinrichtung 26 entsprechend an. Die Ventileinrichtung 26 schaltet demzufolge ihre Ventile derart um, dass auf der Grundlage der Ansteuerung durch die Steuereinrichtung 20 und somit auf der Grundlage der elektrischen Signale der Kupplungspedateinrichtung eine Druckbeaufschlagung der Kupplungsbetätigungseinrichtung 32 zur Betätigung der Kupplung bewirkt wird. Demzufolge betätigt Kupplungsbetätigungseinrichtung 32 die Kupplung, die die entsprechende vollständige Ausrückbewegung vornimmt und damit den Kraftfluss im Antriebsstrang des Fahrzeugs unterbricht. Sinngemäß lässt sich dieser Vorgang auf alle Stellungen der Kupplung übertragen, die von einer vollständig eingerückten Kupplung bis zu einer vollständig ausgerückten Kupplung reichen. Zur Überwachung der exakten Stellung der Kupplung, die mit der Stellung der Kupplungsbetätigungseinrichtung 32 korreliert, umfasst die Kupplungsbetätigungseinrichtung 32 den nicht dargestellten Wegsensor. Der Wegsensor ermittelt somit die exakte Stellung der Kupplungsbetätigungseinrichtung 32 und liefert der Steuereinrichtung 20 mit der Stellung der Kupplungsbetätigungseinrichtung 32 korrelierende Signale. Auf der Grundlage dieser Signale des Wegsensors und weiterhin in Abhängigkeit der elektrischen Signale der Kupplungspedaleinrichtung kann die Steuereinrichtung 20 eine Steuerung/Regelung der Stellung der Kupplungsbetätigungseinrichtung 32 vornehmen.

Figur 2 zeigt eine schematische Darstellung einer erfindungsgemäßen Kupplungsstellvorrichtung 100 gemäß einem zweiten Ausführungsbeispiel der Erfindung, die zur Durchführung des erfindungsgemäßen Verfahrens geeignet ist. Zur Vermeidung von Wiederholungen wird bei der Beschreibung dieses Ausführungsbeispiels lediglich auf die Unterschiede zu dem ersten Ausführungsbeispiel eingegangen, wobei gleiche oder ähnliche Komponenten der erfindungsgemäßen Kupplungsstellvorrichtung 100 mit ähnlichen Bezugszeichen bezeichnet sind. In diesem Ausführungsbeispiel ist die Kupplungsstellungsvorgabeeinrichtung 112 einerseits mit der Steuereinrichtung 120 über eine Stromversorgungsleitung 146 und eine Signalleitung 116 gekoppelt. Andererseits ist die Kupplungsstellungsvorgabeeinrichtung 112 mit einer weiteren Steuereinrichtung 140, beispielsweise einer Antriebsstrang-Steuereinrichtung, über eine Stromversorgungsleitung 114 und eine Signalleitung 118 gekoppelt. Insbesondere kann die Kupplungsstellungsvorgabeeinrichtung 112 zwei voneinander unabhängige Sensoren, insbesondere Kupplungspedalsensoren, umfassen, die jeweils die elektrischen Signale erzeugen. Die weitere Steuereinrichtung 140 ist weiterhin mit der Steuereinrichtung 120 über einen CAN-Bus 148 gekoppelt. Somit kann die Kupplungsstellungsvorgabeeinrichtung 112 ihre elektrischen Signale zum einen der Steuereinrichtung 120 und zum anderen der weiteren Steuereinrichtung 140 zur Verfügung stellen. Die weitere Steuereinrichtung 140 kann die ihr gelieferten Signale wiederum der Steuereinrichtung 120 über den CAN-Bus 148 zur Verfügung stellen. Daher wird bei Ausfall einer der Signalleitungen 116, 118 und/oder einer der Stromversorgungsleitungen 146, 114 die Erzeugung der elektrischen Signale und die Übermittlung der elektrischen Signale an die Steuereinrichtung 120 sichergestellt. Weiterhin umfasst die Steuereinrichtung 120 einen Drucksensor 144 zur Überwachung eines Drucks in der Kupplungsbetätigungseinrichtung 132, beispielsweise durch Ermitteln des Drucks in der Ventileinrichtung 126 oder in der Kopplung 134. Darüber hinaus verfügt die Steuereinrichtung 120 über eine Kommunikationsschnittstelle oder mehrere Kommunikationsschnittstellen 142 zur Kommunikation mit weiteren Steuergeräten des Fahrzeugs, beispielsweise mit einem einen elektronischen Bremssystem (EBS) zugeordneten Steuergerät. Bevorzugt sind in diesem Ausführungsbeispiel insbesondere die Steuereinrichtung 120, die Ventileinrichtung 126, optional der Wegsensor, optional der Drucksensor 144 und optional die Kupplungsbetätigungseinrichtung 132 in dem Gehäuse in der mechatronischen Einheit ausgebildet.

Das erfindungsgemäße Verfahren zur Steuerung/Regelung der Kupplungsstellvorrichtung 100 dieses Ausführungsbeispiels unterscheidet sich von dem des ersten Ausführungsbeispiels darin, dass die Kupplungsstellungsvorgabeeinrichtung 112 in Abhängigkeit von ihrer Stellung zusätzlich weitere elektrische Signale erzeugt und diese weiteren elektrischen Signale an die weitere Steuereinrichtung 140 ausgibt, wobei die weitere Steuereinrichtung 140 die weiteren elektrischen Signale an die Steuereinrichtung 120 ausgibt. Die Steuerung/Regelung der Stellung der Kupplungsbetätigungseinrichtung 132 kann in diesem Ausführungsbeispiel auch auf der Grundalge von Signalen des Drucksensors 144 vorgenommen werden. Insbesondere wird mittels des Drucksensors 144 die Stellung der Kupplungsbetätigungseinrichtung 132 bei Ausfall des Wegsensors oder zur Verbesserung der Regelgüte ermittelt, wobei auf der Grundlage von Signalen des Drucksensors 144 und, im Falle der Verbesserung der Regelgüte, des Wegsensors die Stellung der Kupplungsbetätigungseinrichtung 132 gesteuert/geregelt wird.

### Bezugszeichenliste:

- 10: Kupplungsstellvorrichtung
- 12: Kupplungsstellungsvorgabeeinrichtung
- 14: Stromversorgungsleitung
- 16: Signalleitung
- 18: weitere Signalleitung
- 20: Steuereinrichtung
- 22: Stromversorgungsleitung
- 24: weitere Stromversorgungsleitung
- 26: Ventileinrichtung
- 28: Ventileinrichtungsentlüftung
- 30: Ventileinrichtungsbelüftung
- 32: Kupplungsbetätigungseinrichtung
- 34: Kopplung
- 36: Signalleitung
- 38: weitere Signalleitung
- 100: Kupplungsstellvorrichtung
- 112: Kupplungsstellungsvorgabeeinrichtung
- 114: Stromversorgungsleitung
- 116: Signalleitung
- 118: weitere Signalleitung
- 120: Steuereinrichtung
- 122: Stromversorgungsleitung
- 124: weitere Stromversorgungsleitung
- 126: Ventileinrichtung
- 128: Ventileinrichtungsentlüftung
- 130: Ventileinrichtungsbelüftung
- 132: Kupplungsbetätigungseinrichtung
- 134: Kopplung
- 136: Signalleitung
- 140: weitere Steuereinrichtung
- 142: Kommunikationsschnittstelle
- 144: Drucksensor
- 146: Stromversorgungsleitung
- 148: CAN-Bus

## Patentansprüche

1. Kupplungsstellvorrichtung (100), insbesondere für ein manuelles Schaltgetriebe eines Fahrzeugs, insbesondere eines Nutzfahrzeugs, mit einer Kupplungsstellungsvorgabeeinrichtung, (112) einer ersten Steuereinrichtung und einer zweiten Steuereinrichtung, wobei die Kupplungsstellungsvorgabeeinrichtung in unterschiedliche Stellungen gebracht werden kann, auf deren Grundlage eine entsprechende Betätigung einer Kupplung erfolgt, wobei die Kupplungsstellungsvorgabeeinrichtung (112) geeignet ist, in Abhängigkeit von ihrer Stellung erste elektrische Signale zu erzeugen, auf deren Grundlage die Kupplung entsprechend betätigt wird, wobei die Kupplungsstellungsvorgabeeinrichtung (112) geeignet ist, die ersten elektrischen Signale an die erste Steuereinrichtung (120) auszugeben, die auf der Grundlage der elektrischen Signale eine Druckbeaufschlagung einer Kupplungsbetätigungseinrichtung (132) zur Betätigung der Kupplung bewirkt, **dadurch gekennzeichnet, dass** die Kupplungsstellungsvorgabeeinrichtung (112) geeignet ist, in Abhängigkeit von ihrer Stellung von den ersten Signalen unabhängige zweite elektrische Signale zu erzeugen und diese zweiten elektrischen Signale an die zweite Steuereinrichtung (140) auszugeben, wobei die zweite Steuereinrichtung (140) dazu geeignet ist, die zweiten elektrischen Signale an die erste Steuereinrichtung (120) auszugeben.

2. Kupplungsstellvorrichtung (100) nach Anspruch 1, **dadurch gekennzeichnet, dass** eine Ventileinrichtung (126) vorgesehen ist, die geeignet ist, die Druckbeaufschlagung der Kupplungsbetätigungseinrichtung (132) vorzunehmen.

3. Kupplungsstellvorrichtung (100) nach Anspruch 1 oder 2, **dadurch gekennzeichnet, dass** ein Wegsensor vorgesehen ist, mittels dem eine Stellung der Kupplungsbetätigungseinrichtung (132) ermittelbar ist und auf der Grundlage von dessen Signalen die Stellung der Kupplungsbetätigungseinrichtung (132) steuerbar/regelbar ist.

4. Kupplungsstellvorrichtung (100) nach Anspruch 3, **dadurch gekennzeichnet, dass** weiterhin ein Drucksensor (144) vorgesehen ist, mittels dem die Stellung der Kupplungsbetätigungseinrichtung (132) zumindest bei Ausfall des Wegsensors ermittelbar ist und auf der Grundlage von dessen Signalen die Stellung der Kupplungsbetätigungseinrichtung (132) steuerbar/regelbar ist.

5. Kupplungsstellvorrichtung (100) nach einem der vorangehenden Ansprüche, **dadurch gekennzeichnet, dass** eine oder mehrere der folgenden Komponenten in einem Gehäuse in einer mechatronischen Einheit aufgenommen werden:
- die Steuereinrichtung (120),
- die Ventileinrichtung (126),
- der Wegsensor,
- der Drucksensor (144), und
- die Kupplungsbetätigungseinrichtung (132).

6. Verfahren zur Steuerung/Regelung einer Kupplungsstellvorrichtung (10; 100), insbesondere für ein manuelles Schaltgetriebe eines Fahrzeugs, insbesondere eines Nutzfahrzeugs, wobei die Kupplungsstellvorrichtung (100) eine Kupplungsstellungsvorgabeeinrichtung, (112) eine erste Steuereinrichtung und eine zweite Steuereinrichrung umfasst, die in unterschiedliche Stellungen gebracht wird, auf deren Grundlage eine entsprechende Betätigung einer Kupplung erfolgt, wobei die Kupplungsstellungsvorgabeeinrichtung (112) in Abhängigkeit von ihrer Stellung erste elektrische Signale erzeugt, auf deren Grundlage die Kupplung entsprechend betätigt wird, wobei die Kupplungsstellungsvorgabeeinrichtung (112) die ersten elektrischen Signale an die erste Steuereinrichtung (120) ausgibt, die auf der Grundlage der ersten elektrischen Signale eine Druckbeaufschlagung einer Kupplungsbetätigungseinrichtung (132) zur Betätigung der Kupplung bewirkt, **dadurch gekennzeichnet, dass** die Kupplungsstellungsvorgabeeinrichtung (112) in Abhängigkeit von ihrer Stellung von den ersten Signalen unabhängige zweite elektrische Signale erzeugt und diese zweiten elektrischen Signale an die zweite Steuereinrichtung (140) ausgibt, die die zweiten elektrischen Signale an die erste Steuereinrichtung (120) ausgibt.

7. Verfahren nach Anspruch 6, **dadurch gekennzeichnet, dass** eine Ventileinrichtung (126) die Druckbeaufschlagung der Kupplungsbetätigungseinrichtung (132) vornimmt.

8. Verfahren nach Anspruch 6 oder 7, **dadurch gekennzeichnet, dass** mittels eines Wegsensors eine Stellung der Kupplungsbetätigungseinrichtung (132) ermittelt wird und auf der Grundlage von Signalen des Wegsensors die Stellung der Kupplungsbetätigungseinrichtung (132) gesteuert/geregelt wird.

9. Verfahren nach Anspruch 8, **dadurch gekennzeichnet, dass** mittels eines Drucksensors (144) die Stellung der Kupplungsbetätigungseinrichtung (132) zumindest bei Ausfall des Wegsensors ermittelt wird und auf der Grundlage von Signalen des Drucksensors (144) die Stellung der Kupplungsbetätigungseinrichtung (132) gesteuert/geregelt wird.

## Claims

1. Clutch actuation device (100), particularly for a manual transmission of a vehicle, in particular a commercial vehicle, having a clutch actuation setting device (112), a first control unit and a second control unit, it being possible for the clutch actuation setting device to be placed in various positions, on the basis of which a corresponding operation of a clutch ensues, the clutch actuation setting device (112) being suited, as a function of its position, to generating first electrical signals, on the basis of which the clutch is correspondingly operated, the clutch actuation setting device (112) being suited to delivering the first electrical signals to the first control unit (120), which on the basis of the electrical signals causes a pressure to be applied to a clutch operating device (132) for operation of the clutch, **characterized in that** the clutch actuation setting device (112) is suited to generating second electrical signals, independent of the first signals, as a function of its position and delivering these second electrical signals to the second control unit (140), the second control unit (140) being suited to delivering the second electrical signals to the first control unit (120).

2. Clutch actuation device (100) according to Claim 1, **characterized in that** a valve device (126) is provided, which is suited to applying a pressure to the clutch operating device (132).

3. Clutch actuation device (100) according to Claims 1 or 2, **characterized in that** a travel sensor is provided, which serves to detect a position of the clutch operating device (132), and on the basis of the signals from which it is possible to control/regulate the clutch operating device (132).

4. Clutch actuation device (100) according to Claim 3, **characterized in that** a pressure sensor (144) is furthermore provided, by means of which the position of the clutch operating device (132) can be determined, at least in the event of a failure of the travel sensor, and on the basis of the signals from which it is possible to control/regulate the position of the clutch operating device (132).

5. Clutch actuation device (100) according to one of the preceding claims, **characterized in that** one or more of the following components are accommodated in a housing in a mechatronic unit:
- the control unit (120),
- the valve device (126),
- the travel sensor,
- the pressure sensor (144), and
- the clutch operating device (132).

6. Method for controlling/regulating a clutch actuation device (10; 100), particularly for a manual transmission of a vehicle, in particular a commercial vehicle, the clutch actuation device (100) comprising a clutch actuation setting device (112), a first control unit and a second control unit that is placed in various positions, on the basis of which a corresponding operation of a clutch ensues, the clutch actuation setting device (112) generating, as a function of its position, first electrical signals, on the basis of which the clutch is correspondingly operated, the clutch actuation setting device (112) delivering the first electrical signals to the first control unit (120), which on the basis of the first electrical signals causes a pressure to be applied to a clutch operating device (132) for operation of the clutch, **characterized in that** the clutch actuation setting device (112) generates second electrical signals independent of the first signals as a function of its position and delivers these second electrical signals to the second control unit (140), which delivers the second electrical signals to the first control unit (120).

7. Method according to Claim 6, **characterized in that** a valve device (126) applies a pressure to the clutch operating device (132).

8. Method according to Claim 6 or 7, **characterized in that** a position of the clutch operating device (132) is detected by means of a travel sensor, and the position of the clutch operating device (132) is controlled/regulated on the basis of signals from the travel sensor.

9. Method according to Claim 8, **characterized in that** the position of the clutch operating device (132) is determined by means of a pressure sensor (144), at least in the event of a failure of the travel sensor, and the position of the clutch operating device (132) is controlled/regulated on the basis of signals from the pressure sensor (144).

## Revendications

1. Dispositif (100) de commande d'embrayage, notamment pour une boîte de vitesse manuelle d'un véhicule automobile, notamment d'un véhicule utilitaire, comprenant un dispositif (112) de prescription de la position de l'embrayage, un premier dispositif de commande et un deuxième dispositif de commande, le dispositif de prescription de la position de l'embrayage pouvant être mis en des positions différentes, sur la base desquelles s'effectue un actionnement correspondant d'un embrayage, le dispositif (112) de prescription de la position de l'embrayage étant propre à produire, en fonction de sa position, des premiers signaux électriques, sur la base desquels l'embrayage est actionné d'une manière correspondante, le dispositif (112) de prescription de la position de l'embrayage étant propre à émettre les premiers signaux électriques vers le premier dispositif (120) de commande, qui, sur la base des signaux électriques, provoque une alimentation en pression d'un dispositif (132) d'actionnement de l'embrayage pour l'actionnement de l'embrayage, en ce que le dispositif (112) de prescription de la position de l'embrayage est propre à produire, en fonction de sa position, des deuxièmes signaux électriques indépendants des premiers signaux et à envoyer ces deuxièmes signaux électriques au deuxième dispositif (140) de commande, le deuxième dispositif (140) de commande étant propre à envoyer les deuxièmes signaux électriques au premier dispositif (120) de commande.

2. Dispositif (100) de commande d'embrayage suivant la revendication 1, **caractérisé en ce qu'**il est prévu un dispositif (126) à vanne, qui est propre à effectuer l'alimentation en pression du dispositif (132) d'actionnement de l'embrayage.

3. Dispositif (100) de commande d'embrayage suivant la revendication 1 ou 2, **caractérisé en ce qu'**il est prévu un capteur de trajet, au moyen duquel une position du dispositif (132) d'actionnement de l'embrayage peut être déterminée et sur la base des signaux duquel la position du dispositif (132) d'actionnement de l'embrayage peut être commandée/réglée.

4. Dispositif (100) de commande d'embrayage suivant la revendication 3, **caractérisé en ce qu'**il est prévu, en outre, un capteur (144) de pression, au moyen duquel la position du dispositif (132) d'actionnement de l'embrayage peut être déterminée, au moins lorsque le capteur de trajet est défaillant, et sur la base des signaux duquel la position du dispositif (132) d'actionnement de l'embrayage peut être commandée/réglée.

5. Dispositif (100) de commande d'embrayage suivant l'une des revendications précédentes, **caractérisé en ce qu'**un ou plusieurs des composants suivants sont logés dans un boîtier d'une unité mécatronique :
- le dispositif (120) de commande,
- le dispositif (126) à vanne,
- le capteur de trajet,
- le capteur (144) de pression, et
- le dispositif (132) d'actionnement de l'embrayage.

6. Procédé de commande/régulation d'un dispositif (10, 100) de commande d'embrayage, notamment pour une boîte de vitesse manuelle d'un véhicule automobile, notamment d'un véhicule utilitaire, dans lequel le dispositif (100) de commande d'embrayage comprend un dispositif (112) de prescription de la position de l'embrayage, un premier dispositif de commande et un deuxième dispositif de commande, le dispositif (112) étant mis en des positions différentes, sur la base desquelles un actionnement correspondant d'un embrayage s'effectue, le dispositif (112) de prescription de la position de l'embrayage produisant, en fonction de sa position, des premiers signaux électriques, sur la base desquels l'embrayage est actionné de manière correspondante, dans lequel le dispositif (112) de prescription de la position de l'embrayage envoie les premiers signaux électriques au premier dispositif (120) de commande, qui, sur la base des premiers signaux électriques, provoque une alimentation en pression d'un dispositif (132) d'actionnement de l'embrayage pour actionner l'embrayage, **caractérisé en ce que** le dispositif (112) de prescription de la position de l'embrayage produit, en fonction de sa position, des deuxièmes signaux électriques indépendants des premiers signaux et envoie ces deuxièmes signaux électriques au deuxième dispositif (140) de commande, qui envoie les deuxièmes signaux électriques au premier dispositif (120) de commande.

7. Procédé suivant la revendication 6, **caractérisé en ce qu'**un dispositif (126) à vanne effectue l'alimentation en pression du dispositif (132) d'actionnement de l'embrayage.

8. Procédé suivant la revendication 6 ou 7, **caractérisé en ce que**, au moyen d'un capteur de trajet, on détermine une position du dispositif (132) d'actionnement de l'embrayage et, sur la base de signaux du capteur de trajet, on commande/règle la position du dispositif (132) d'actionnement de l'embrayage.

9. Procédé suivant la revendication 8, **caractérisé en ce que**, au moyen d'un capteur (144) de pression, on détermine la position du dispositif (132) d'actionnement de l'embrayage, au moins lorsque le capteur de trajet est défaillant, et, sur la base de signaux du capteur (144) de pression, on commande/règle la position du dispositif (132) d'actionnement de l'embrayage.
